# EUROPÄISCHE PATENTSCHRIFT

(11) **EP 2 182 209 B1**
(45) Veröffentlichungstag und Bekanntmachung des Hinweises auf die Patenterteilung: **14.12.2016**
(21) Anmeldenummer: 09013257.2
(22) Anmeldetag: 21.10.2009
(51) Int. Cl.: E04H 12/02, E04H 12/16, E02D 27/42

(54) **Hybrides Turmbauwerk**
Hybrid tower structure
Construction de tour hybride

(30) Priorität: 28.10.2008 DE 102008053454
(43) Veröffentlichungstag der Anmeldung: 05.05.2010
(73) Patentinhaber: Wendling-Lenz, Gisela, 93059 Regensburg (DE)
(72) Erfinder: Wendling-Lenz, Gisela, 93059 Regensburg (DE); Zinner, Jörg, 93128 Regenstauf (DE); Neidhart, Thomas, Prof., 93049 Regensburg (DE); Springer, Othmar, Prof., 84095 Furth (DE); Laumer, Christian, 94347 Ascha (DE); Min, Yan, 93051 Regensburg (DE)
(74) Vertreter: Glück Kritzenberger Patentanwälte PartGmbB

(56) Entgegenhaltungen:
- EP-A1- 1 876 316
- EP-A2- 1 262 614
- WO-A1-2008/136717
- DE-U1-202005 010 398
- JP-A- 2005 180 082
- JP-A- 2007 077 795
- JP-A- 2008 255 602

## Beschreibung

Die Erfindung betrifft ein hybrides Turmbauwerk, insbesondere für Windenergieanlagen, gemäß dem Patentanspruch 1.

Turmbauwerke für Windenergieanlagen sind hinlänglich bekannt. Vorzugsweise weisen diese eine aus Spannbeton hergestellte Betonturmsäule, welche auf einem als Flachgründung ausgebildeten Fundament errichtet sind. An die Betonturmsäule schließt sich zumindest ein Stahlturmelement an, welches eine Windenergieanlage trägt.

Um die hohen Lasten am Turmkopf sicher in das Fundament und den Baugrund zu leiten sowie ein günstiges Verhältnis von Eigenfrequenz des Turmes und Erregerfrequenz der Windenergieanlage zu erzielen, ist die Ausführung des Turmes als vorgespannter Stahlbetonturm unter Berücksichtigung der Lebensdauerkosten eine bevorzugte Lösung. Ein derartiger vorgespannter Stahlbetonturm bzw. Betonturmsäule wird vorzugsweise durch eine Vielzahl von entlang der Turmlängsachse aneinander anschließender Betonturmwandabschnitte gebildet, die überlicherweise einen ringförmigen Querschnitt aufweisen.

Leistungsstarke Windenergieanlagen der Multimegawattklasse, beispielsweise von 2 bis 5 MW weisen beispielsweise Rotorblätter mit einem Rotordurchmesser von bis zu 126m auf, die beispielsweise in einer Höhe von mehr als 100 m platziert werden, um eine möglichst reichhaltige Windernte zu erhalten. Hierbei ist von einer Verbesserung des Wirkungsgrades der Windenergieanlage von bis zu einem Prozentpunkt pro Höhenmeter, bei Höhen größer 100m, auszugehen. Derzeit sind Nabenhöhen von mehr als 140m nur über Fachwerk-Gittermasttürme möglich, welche jedoch aufgrund ihrer Konstruktion einen hohen Wartungsaufwand und einen geringen Schutz der im Turm befindlichen Bauteile bedingen. Es besteht daher ein Bedarf an Stahlbetontürmen, die Nabenhöhen von mehr als 140m ermöglichen.

Bekannte Betonturmsäulen werden in der so genannten Segmentbauweise mit nachträglichem Verbund errichtet. Dies basiert auf einer Konstruktion, bei welcher die einzelnen Betonturmwandabschnitte in vertikaler Bauweise verklebt werden. Erst nach kompletter Errichtung der somit entstehenden Betonturmsäule, d.h. Aneinanderreihung der Betonturmwandabschnitte, erfolgt die Verspannung dessen. Nachteilig können aufgrund des dauerhaften Verbundes der Spannglieder mit den Betonturmwandabschnitten die Spannglieder, die in Hohlräumen der Betonturmwandabschnitte geführt sind, nicht ausgetauscht oder nachgespannt werden. Des Weiteren laufen die Hüllrohre der Spannglieder ebenfalls in den Betonturmwandabschnitten, was eine Untersuchung und Wartung dieser zusätzlich zu den Spanngliedern erschwert.

Eine externe Vorspannung eines Spannbetonturmes ist beispielsweise der EP 1262614 A2 zu entnehmen. Zur Verspannung der Betonturmsäule entlang der Längsachse sind hierbei mehrere vorzugsweise innerhalb des von der Betonturmsäule eingeschlossenen Hohlraumes verlaufende externe Spannglieder vorgesehen. Die externen Spannglieder laufen hierbei innerhalb der Wandung der Betonturmsäule. Hierbei sind die externen Spannglieder durch mehrere Spannkabel gebildet, deren eines freies Ende im Fundament und deren anderes freies Ende in dem die Turmkrone bildenden obersten Betonturmwandabschnitt verankert sind. Die Vorspannung wird hierbei erst nach der kompletten Errichtung der Betonturmsäule über die gesamte Turmhöhe konstant aufgebracht. Des Weiteren müssen besonders nachteilig die bei Nabenhöhen von weit über 100m auftretenden Windlasten im Montagezustand von der Verklebung der in vertikaler Bauweise aufeinander angebrachten Betonturmwandabschnitte aufgenommen werden, da die Vorspannung erst nach der kompletten Errichtung der Betonturmsäule aufgebracht wird. Dieser Umstand kann bei schlechten Windverhältnissen zu langen Montageunterbrechungen oder einem hohen Montagerisiko führen.

Das Fundament ist üblicherweise als Flachgründung mit oder ohne Auftriebssicherung, und zwar als reines Schwergewichtsfundament ausgebildet. Den Fundamentkörper bildet hierbei ein unterirdisches Bauwerk in Ortbetonbauweise, dessen Fundamentunterkante liegt hierbei vorzugsweise in mehr als 3,5 m Tiefe. Die Einleitung der Zug- und Drucklasten erfolgt bei derartigen Flachgründungen zu nahezu 100% direkt über den die Aufstandsfläche bildenden Fundamentkörper. Hierbei wird die Vorspannung in Fundamentkörper eingeleitet, welcher sich unterhalb der Geländeoberkante befindet. Zur Verspannung der Betonturmsäule mit dem Fundamentkörper ist im Fundamentkörper ein Arbeitsraum vorzusehen, wodurch besonders nachteilig für den Fundamentkörper eine erhebliche Bauteildicke vorzusehen ist. Die Ausbildung des Arbeitsraumes im Fundamentkörper erfordert einen erheblichen Schalungsaufwand. Zusätzlich der durch den Arbeitsraum gebildete Hohlraum bei vorhandenem Grundwasser einen erheblichen Auftrieb, welcher der Funktion des Fundamentkörpers als Schwergewichtsfundament entgegenwirkt. Die Herstellung einer Flachgründung ist somit sehr arbeits-, material-, zeit- und kostenintensiv.

Die Druckschrift JP 2005-180082 A offenbart einen Betonturm mit einem als Flachgründung ausgebildeten Fundament. Der Betonturm besteht aus drei Betonturmabschnitten. Ferner ist der Betonturm höhenmäßig in fünf Segmente unterteilt, wobei die untersten beiden Segmente im unteren Betonturmabschnitt, die oberen beiden Segmente im oberen Betonturmabschnitt und wein weiteres Segment im Mittelbereich angeordnet ist. Den einzelnen Segmenten sind jeweils Spannelemente zugeordnet, wobei die einzelnen, den Betonturm bildenden ringförmigen Betonturmwandabschnitte eines Segments jeweils mittels einer Spannelementgruppe miteinander verspannt werden. Somit erstrecken sich die Spannelemente jeweils abschnittsweise über Teillängen des Betonturms. Nachteilig hierbei ist, dass die Spannelemente keinerlei vorteilhafte Anpassung eines Vorspannungsverlaufs erzielen bzw. eine Einleitung der Vorspannung in statisch vorteilhafte Höhen der Betonturmsäule bewirken können.

Die Druckschrift DE-U-20 2005 010 398 offenbart ein hybrides Turmbauwerk für Windenergieanlagen, mit einem Fundament, mit einer auf dem Fundament errichteten Betonturmsäul, bei dem die Betonturmsäule durch erste bis n-te entlang der Turmlängsachse aneinander anschließende Betonturmwandabschnitte gebildet ist, wobei die Betonturmwandabschnitte einen ringförmigen Querschnitt aufweisen und zur Beaufschlagung der Betonturmsäule mit einer Vorspannung mehrere innerhalb des von der Betonturmsäule eingeschlossenen Hohlraumes verlaufende, externe Spannglieder vorgesehen sind, die zur gestaffelten Beaufschlagung der Betonturmsäule mit der Vorspannung ausgebildet sind, wobei die Vorspannung über die einzelnen Betonturmwandabschnitte verteilt ist und die Einleitung der Vorspannung in das Fundament, wobei die Spannglieder mit ihrem unteren freien Ende mit dem Fundament verbunden sind, wobei zumindest ein Teil der Spannglieder mit ihren oberen freien Enden mit dem n-ten, Betonturmwandabschnitt verbunden sind und wobei zumindest ein weiterer Teil der Spannglieder mit zumindest einem zwischen dem ersten und n-ten Betonturmwandabschnitt angeordneten Betonturmwandabschnitt verbunden sind.

Ausgehend hiervon liegt der Erfindung die Aufgabe zugrunde, ein hybrides Turmbauwerk anzugeben, welches die aus dem Stand der Technik bekannten Nachteile beseitigt und Nabenhöhen von mehr als 140m ermöglicht. Die Aufgabe wird durch die nicht aus DE-U-20 2005 101 398 bekannten Merkmale des Anspruchs 1 gelöst.

Der wesentliche Aspekt des erfindungsgemäßen hybriden Turmbauwerkes ist darin zu sehen, dass das Fundament durch eine kombinierte Pfahl-Platten-Gründung oder eine Pfahl-Gründung bestehend aus zumindest einem Fundamentgrundkörper und mehreren mit diesem verbundenen Pfählen gebildet ist, dass die externen Spannglieder zur gestaffelten Beaufschlagung der Betonturmsäule mit der Vorspannung ausgebildet sind, wobei die Vorspannung über die einzelnen Betonturmwandabschnitte verteilt ist und die Einleitung der Vorspannung zumindest in den an das Fundament anschließenden ersten Betonturmabschnitt erfolgt, dass die Spannglieder mit ihrem unteren freien Ende mit dem ersten, an das Fundament anschließenden Betonturmwandabschnitt verbunden sind, dass zumindest ein Teil der Spannglieder mit ihren oberen freien Enden mit dem n-ten, dem Stahlturmelement benachbarten Betonturmwandabschnitt verbunden sind und dass zumindest ein weiterer Teil der Spannglieder mit zumindest einem zwischen dem ersten und n-ten Betonturmwandabschnitt angeordneten Betonturmwandabschnitt verbunden sind. Besonders vorteilhaft ist der unter der Geländeoberkante befindliche Baukörper der erfindungsgemäßen Gründungsvarianten annähernd monolithisch ausgebildet und somit wesentlich arbeits-, material-, zeit- und kostengünstiger zu realisieren. Auch verursacht die erfindungsgemäße kombinierte Pfahl-Platten-Gründung bzw. Pfahlgründung bei vorhandenem Grundwasser durch die annähernd monolithische Bauweise keinen Auftrieb, welcher nachteilig der Funktion des Fundamentkörpers entgegenwirken würde. Weiterhin vorteilhaft erfolgt die Einleitung der Zug- und Drucklasten in die Aufstandsfläche des Fundamentgrundkörpers und die Pfähle in einem vorgegebenen Verhältnis, und zwar beispielsweise ist die Zug- und Druckbelastung der Pfähle höher als des Fundamentgrundkörpers. Die erfindungsgemäße Hybridbauweise ermöglicht eine deutlich höhere Ausbildung des Spannbetonturmes. Darüber hinaus kann der Fundamentgrundkörper als ein beispielsweise aus mehreren Segmenten hergestelltes Fertigbetonbauteil ausgebildet sein, welches in die Betonturmsäule integrierbar ist.

Durch die Verbindung der Spannglieder mit ihrem unteren freien Ende mit dem ersten Betonturmwandabschnitt ergibt sich vorteilhaft eine Einleitung der Vorspannung in den ersten und n-ten Betonturmwandabschnitt, d.h. der Angriffspunkt der Vorspannung wird aus dem unterirdischen Fundament in den oberirdischen vorgesehen ersten Betonturmwandabschnitt verlagert. Die Einbringung der Spannglieder in das hybride Turmbauwerk erfolgt somit in den an das Fundament anschließenden ersten Betonturmwandabschnitt bzw. in dem von diesem eingeschlossenen Hohlraum. Dieser befindet sich besonders vorteilhaft über der Geländeoberkante, wodurch sich bereits eine Vergrößerung der Gesamtbauwerkshöhe um die Höhe des Arbeitsraumes über Geländeoberkante ergibt.

Durch die Verbindung zumindest eines weiteren Teils der Spannglieder mit zumindest einem zwischen dem ersten und n-ten Betonturmwandabschnitt angeordneten Betonturmwandabschnitt wird eine gestaffelte Beaufschlagung der Betonturmsäule mit der erforderlichen Vorspannung vorgenommen. Hierdurch wird eine individuelle Anpassung des Vorspannungsverlaufes möglich, und zwar erfolgt die Einleitung in statisch vorteilhaften Höhen der Betonturmsäule.

Durch Kombination zweier Stahlturmsegmente, und zwar ein ersten Stahlsegmentes mit konischem oder geradlinigem Verlauf und Anschluss an das Maschinenhaus sowie einem zweiten Stahlsegment mit geradlinigem Verlauf können Nabenhöhen von mehr als 150 erzielt werden.

Vorteilhafte Weiterbildungen der Erfindung sind Gegenstand der abhängigen Ansprüche.

Im Folgenden wird die Erfindung an einem Ausführungsbeispiel anhand von Figuren beispielhaft erläutert. Es zeigen:
- Fig. 1: eine Längsschnitt durch das erfindungsgemäße hybride Turmbauwerk,
- Fig. 2: einen Längsschnitt durch das als kombinierte Pfahl-Platten-Gründung realisierten Fundamentes des hybriden Turmbauwerkes,
- Fig. 3: einen Längsschnitt durch das als Pfahl- Gründung realisierten Fundamentes des hybriden Turmbauwerkes,
- Fig. 4: einen Ausschnitt des oberen Bereiches der Betonturmsäule gemäß Figur 1,
- Fig. 5: einen Ausschnitt eines eine Arbeitsplattform ausbildenden Betonturmwandabschnittes gemäß Figur 4;
- Fig. 6: einen Schnitt durch das hybride Turmbauwerk gemäß Figur 1 entlang der Linie G-G,
- Fig. 7: einen Schnitt durch das hybride Turmbauwerk gemäß Figur 1 entlang der Linie I-I,

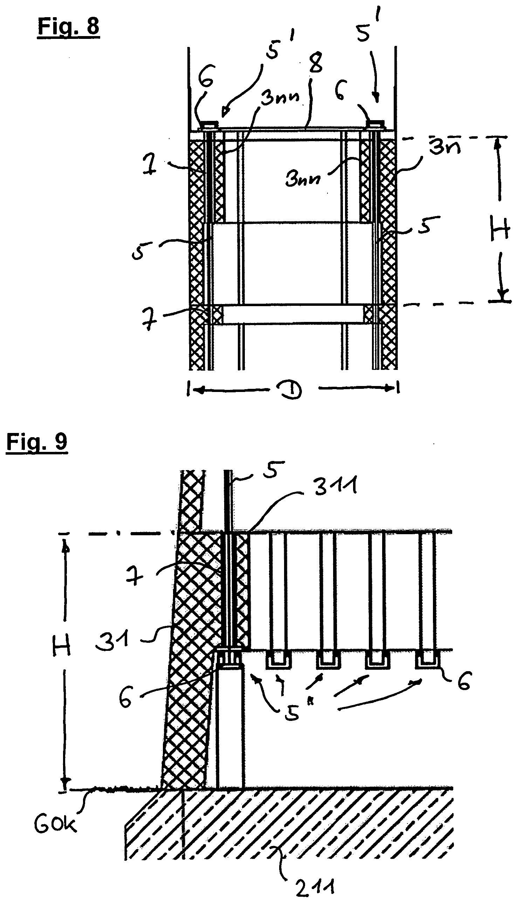

- Fig. 8: eine Ausschnittdarstellung des n-ten Betonturmwandabschnittes und
- Fig. 9: eine Ausschnittdarstellung des ersten Betonturmwandabschnittes.

Im Folgenden wird mit 1 ein hybrides Turmbauwerk für Windenergieanlagen bezeichnet, welches zur Aufnahme einer leistungsstarken Windenergieanlage von 2 bis 5 MW im Bereich der Turmkrone 1' ausgebildet ist.

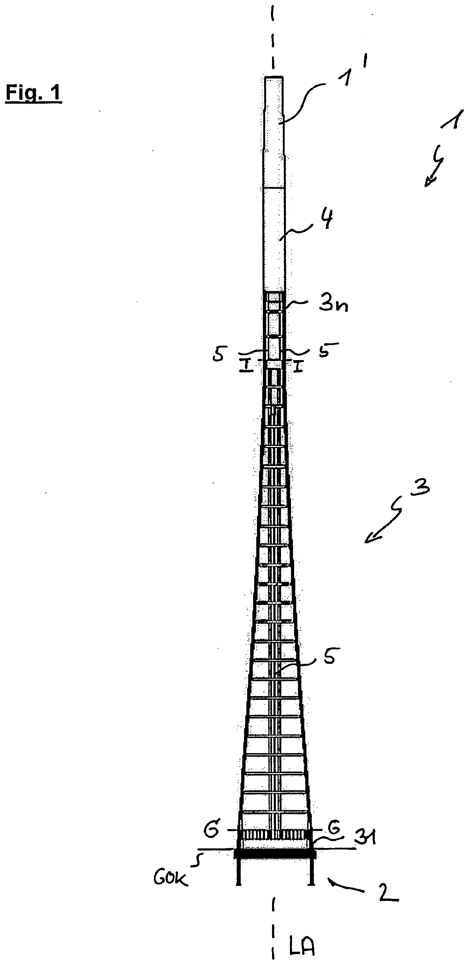

In Figur 1 ist beispielhaft in einer schematischen Schnittdarstellung ein Längsschnitt durch ein derartiges hybrides Turmbauwerk 1 - ohne montierter Windenenergieanlage - dargestellt. Das erfindungsgemäße hybride Turmbauwerk 1 ist vorzugsweise zur Aufnahme von Windenergieanlagen der Multimegawattklasse, d.h. beispielsweise zwischen 2 bis 5 MW vorgesehen.

Das hybride Turmbauwerk 1 besteht aus einem Fundament 2 und einer auf dem Fundament 2 errichteten Betonturmsäule 3, an welche sich entlang der Turmlängsachse LA ein Stahlturmelement 4 anschließt. Das von der Betonturmsäule 3 abgewandte freie Ende des Stahlturmelementes 4 bildet die Turmkrone 1' des hybriden Turmbauwerkes 1 aus, im Bereich dessen üblicherweise die mehrere Rotorblätter aufweisende Windenergieanlage montiert wird. In einer bevorzugten Ausführungsform ist das Stahlturmelement 4 als Stahlmast realisiert, der an die Betonturmsäule 3 angepasst ist.

Die Betonturmsäule 3 ist in Segmentbauweise realisiert, d.h. die Betonturmsäule 3 wird durch eine Vielzahl von entlang der Turmlängsachse LA aneinander anschließender Betonturmwandabschnitte, und zwar beispielsweise erste bis n-te Betonturmwandabschnitte 31 bis 3n gebildet. Die Betonturmwandabschnitte 31 bis 3n weisen jeweils einen ringförmigen Querschnitt auf, wobei der Durchmesser D der Betonturmwandabschnitte 31 bis 3n ausgehend vom Fundament 2 entlang der Turmlängsachse LA in Richtung der Turmkrone 1' abnimmt. Somit bilden die Betonturmwandabschnitte 31 bis 3n hohlzylinderartige Fertigbauteile aus, die gegebenenfalls aus mehrteilige aufgebaut sein können, und zwar aus beispielsweise drei oder mehreren Fertigbauteilsegmenten zusammengesetzt werden können, die im montierten Zustand die ringförmige Querschnittsstruktur bilden.

Ebenfalls können einzelne der Betonturmwandabschnitte 31 bis 3n einen leicht trapezförmigen Längsschnitt aufweisen, d.h. der Außendurchmesser D der stirnseitigen Öffnungen eines Betonturmwandabschnittes 31 bis 3n ist unterschiedlich ausgebildet. Die vertikale Höhe H der Betonturmwandabschnitte 31 bis 3n kann ebenfalls - zumindest im Anschlussbereich des Stahlturmelementes 4 - variieren. Vorzugsweise ist jedoch die Höhe H der den unteren Abschnitt der Betonturmsäule 3 bildenden Betonturmwandabschnitte 31 bis 3n deutlich geringer als der Außendurchmesser D. Zur Herstellung der Betonturmsäule 3 werden die entlang der Turmlängsachse LA angeordneten Betonturmwandabschnitte 3.1 bis 3.n miteinander verklebt und anschließend eine vorzugsweise verteilte, d.h. abschnittsweise Verspannung mehrerer bereits miteinander verklebter Betonturmwandabschnitte 3.1 bis 3.n vorgenommen. Hierdurch erfolgt eine gestaffelte Einleitung der Vorspannung in den jeweils bereits erstellen Abschnitt der Betonturmsäule 3, und zwar während der Bauphase in statisch vorteilhaften Höhen. Die in die Betonturmsäule 3 eingebrachte Vorspannkraft kann somit individuell an den Momentenverlauf des hybriden Turmbauwerkes 1 angepasst werden. Hierbei kann der Momentenverlauf des hybriden Turmbauwerkes 1 eines "eingespannten Kragarmes" entsprechen, welcher von der Turmkrone 1' in Richtung Fundament 2 annähernd linear zunimmt.

Die in vertikaler Bauweise miteinander verklebten Betonturmwandabschnitte 31 bis 3n bilden somit eine geschlossene Betonturmwandung aus, die zumindest abschnittsweise einen innen liegenden Hohlraum 3' einschließt. Im Hohlraum 3' können beispielsweise Treppenaufgänge und/oder Lasten- bzw. Personenaufzüge angeordnet sein.

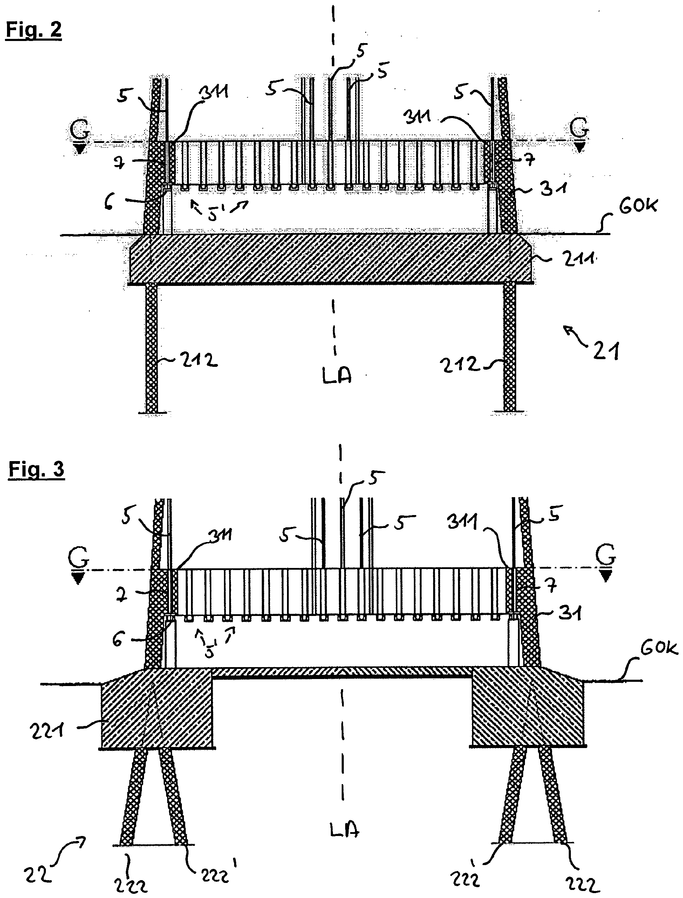

In den Figuren 2 und 3 sind zwei unterschiedliche Realisierungsformen des zur Gründung des hybriden Turmbauwerks 1 vorgesehenen Fundaments 2 dargestellt. Erfindungsgemäß kann das Fundament 2 als kombinierte Pfahl-Platten-Gründung 21 (Figur 2) oder als Pfahl-Gründung 22 (Figur 3) ausgebildet sein.

Diese weisen jeweils zumindest einen Fundamentgrundkörper 211, 221 und mehrere mit diesem verbundene Pfähle 212 und 222 auf, wobei die Oberseite des Fundamentgrundkörpers 211, 221 in etwa bündig mit der Geländeoberkante GOK verläuft. Der Fundamentgrundkörper 211, 221 bildet jeweils ein Auflager für den ersten Betonturmwandabschnitt 31 der Betonturmsäule 3 aus, wobei das Auflager beispielsweise Aussparungen und/oder eine Umfangsbereich vorgesehen dreieckförmige Abschrägung ("Vouten") aufweisen kann.

Der Fundamentgrundkörper der kombinierten Pfahl-Platten-Gründung 21 ist hierbei durch eine Fundamentplatte 211 gebildet, wohingegen der Fundamentgrundkörper der Pfahl-Gründung 22 als Ringfundament 221 realisiert ist. Die Fundamentplatte 211 bzw. das Ringfundament 221 können hierbei einen runden, ovalen, rechteckigen, quadratischen oder polygonartigen Außenquerschnitt aufweisen, wobei dessen Außendurchmesser zumindest teilweise den Außendurchmesser des ersten, auf dem Fundamentgrundkörper 211, 221 aufliegenden Betonturmwandabschnitt 31 überschreitet, d.h. der Außenquerschnitt des Fundamentgrundkörpers 211, 221 überlappt zumindest teilweise den ersten Betonturmwandabschnitt 31.

Bei der kombinierten Pfahl-Platten-Gründung 21 sind die Pfähle 212 näherungsweise parallel zur Turmlängsachse LA bzw. näherungsweise senkrecht zur Fundamentplatte 211 angeordnet. Im Falle der Pfahl-Gründung 22 sind jeweils zumindest zwei Pfähle 222, 222' in einem spitzen Winkel zueinander angeordnet, wobei diese jeweils nahezu symmetrisch zu einem gedachten Hohlzylinder angeordnet sind, der im wesentlichen der Fortsetzung des ersten Betonturmwandabschnitt 3.1 durch das Ringfundament 221 entspricht. Somit sind die jeweils zumindest zwei Pfähle 222, 222' in einer die Turmlängsachse LA aufnehmenden Ebene angeordnet.

Vorzugsweise sind die Pfähle 212, 222, 222' in zumindest einer Reihe angeordnet und in etwa gleichmäßig entlang des Umfangbereiches der Fundamentplatte 211 bzw. des Ringfundamentes 221 verteilt. Beispielsweise können die Pfähle 212, 222, 222' konzentrisch zur Turmlängsachse LA angeordnet sein. Vorzugsweise sind die Pfähle 212 der kombinierten Pfahl-Platten-Gründung 21 zur Abtragung zwischen 1 % und 99%, vorzugsweise von 10% bis 90% der Last und die Pfähle 222 der Pfahl-Gründung 22 zur Abtragung von bis zu 99% der Last ausgebildet. Die Pfähle 212, 222, 222' können ferner als Fertigbetonpfähle oder Ortbetonpfähle realisiert werden, welche in den Untergrund gerammt, gebohrt oder einvibriert werden.

Zur Beaufschlagung der Betonturmsäule 3 mit einer verteilten bzw. gestaffelten Vorspannung sind mehrere innerhalb des von der Betonturmsäule 3 eingeschlossenen Hohlraumes 3' verlaufende, externe Spannglieder 5 vorgesehen. Die einzelnen Spannglieder 5 sind jeweils vorzugsweise durch Spannkabel gebildet, deren freie Enden 5', 5" mittels Festanker 6 zwischen zwei Betonturmwandabschnitten 31 bis 3n verankert sind. Die Spannglieder 5 erstrecken sich hierbei entlang der Innenseite der Betonturmwandung.

In einer bevorzugten Ausführungsform weisen die Betonturmwandabschnitte 31 bis 3n zumindest teilweise einen in den Hohlraum 3' der Betonturmsäule 3 hineinragenden Flanschabschnitt 311 bis 3nn auf, der in Draufsicht ebenfalls eine ringartige Struktur ausbildet und somit den Durchmesser des Hohlraumes 3' im Bereich des Flanschabschnittes 311 bis 3nn beschränkt. Der jeweilige Flanschabschnitt 311 bis 3nn ist einstückig mit dem jeweiligen Betonturmwandabschnitt 31 bis 3n ausgebildet und vorzugsweise an dessen oberer Stirnseite vorgesehen. Der Flanschabschnitt 311 bis 3nn bildet somit eine umlaufende Konsole aus, die zur Versteifung des jeweiligen Betonturmwandabschnittes 31 bis 3n und somit der gesamten Betonturmsäule 3 beiträgt.

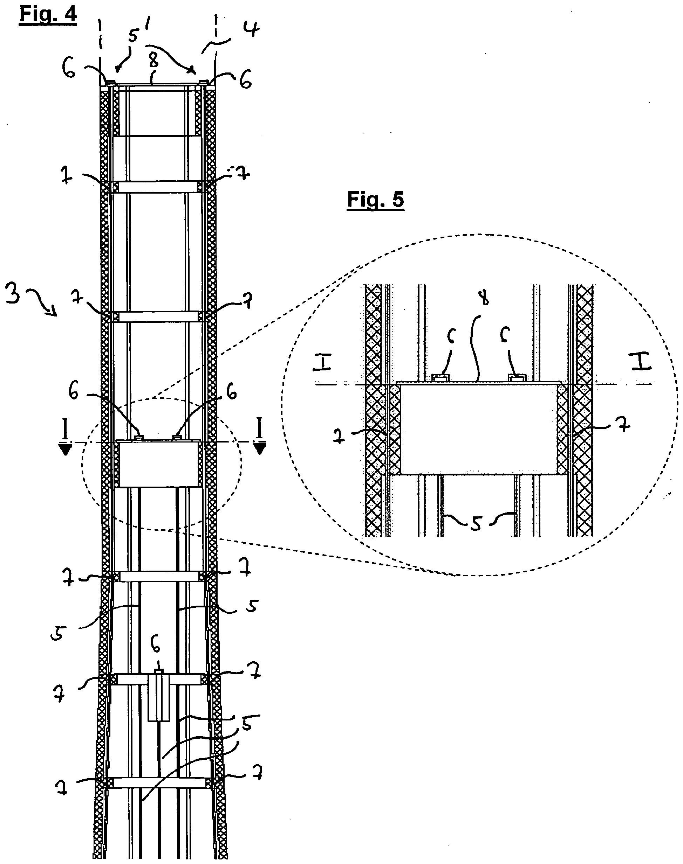

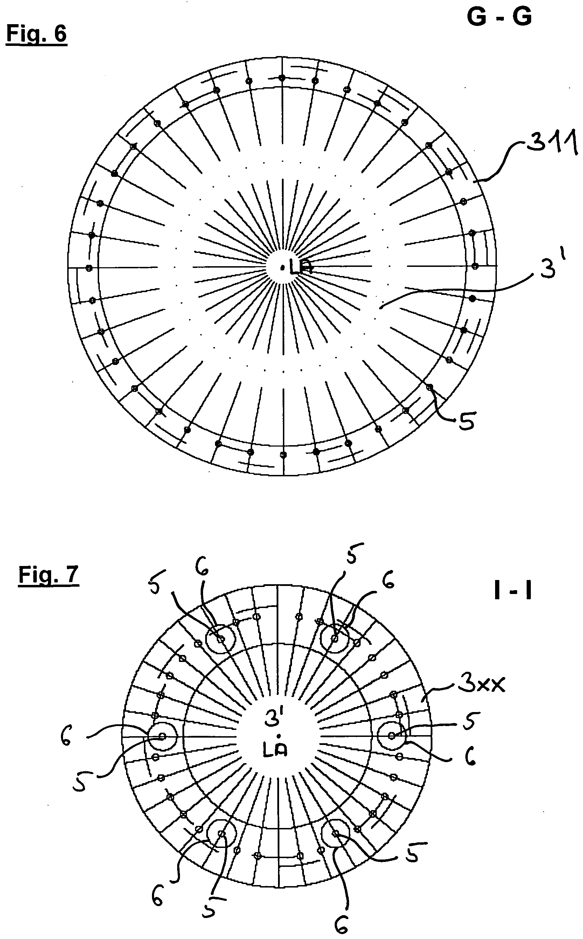

Ferner weisen die Flanschabschnitte 311 bis 3nn vorzugsweise mehrere in Richtung der Turmlängsachse LA verlaufende Längsbohrungen 7 zur Durchführung der Spannglieder bzw. Spannkabel 5 auf, die beispielsweise über den Umfangsbereich verteilt angeordnet sind. In den Figuren 6 und 7 ist beispielsweise ein Schnitt durch die Betonturmsäule 3 entlang der Linien G-G (siehe Figur 2 und 3) bzw. I-I (siehe Figur 4 und 5) dargestellt, dem jeweils eine annähernd gleichmäßige Verteilung der Längsbohrungen, und zwar konzentrisch zur Turmlängsachse LA zu entnehmen ist. Die im Umfangsbereich der Betonturmsäule 3 vorgesehen Spannglieder 5 erstrecken sich hierbei vorzugsweise über sämtliche Betonturmwandabschnitte 31 bis 3n, dessen freien Enden 5', 5" sind im ersten bzw. n-ten Betonturmwandabschnitte 31, 3n mittels entsprechender Festanker 6 verankert. Hierzu sind der im ersten und n-ten Betonturmwandabschnitt 31, 3n vorgesehenen erste und n-te Flanschabschnitt 311, 3nn verstärkt ausgebildet, und zwar erstreckt sich dieser jeweils nahezu über halbe Höhe H des ersten bzw. n-ten Betonturmwandabschnittes 31, 3n.

Des Weiteren können die durch den Flanschabschnitt 311 bis 3nn gebildeten umlaufenden Konsolen zur Führung von Kabelschächten für die Ableitung der über die Windenergieanlage erzeugten Energie dienen, und zwar von der Turmkrone 1' in den Turmfuß. Auch können die durch den Flanschabschnitt 311 bis 3nn gebildeten umlaufenden Konsolen als Auflager für Arbeitsplattformen 8 und Befahreinrichtungen wie beispielsweise Fahrstühle fungieren.

Zur verteilten bzw. gestaffelten Beaufschlagung der Betonturmsäule 3 mit einer Vorspannung können einzelne Spannglieder 5 vorgesehen sein, die sich vom ersten Betonturmwandabschnitte 31 über mehr als ½, vorzugsweise bis zu ¾ der gesamten Höhe der Betonturmsäule 3 erstrecken. Zusätzlich hierzu sind weitere Spannglieder 5 vorgesehen, die sich über zwei weitere Betonturmwandabschnitte 31 bis 3n erstrecken. Die unteren freien Enden 5' vorzugsweise sämtlicher Spannglieder 5 sind hierbei im ersten Betonturmwandabschnitte 31 fixiert, der auf dem Fundament 5 aufliegt. Der Angriffspunkt der Vorspannung ist somit im Vergleich zum Stand der Technik aus dem Fundament 2 in den ersten Betonturmwandabschnitte 31 verlagert, d.h. der Angriffspunkt befindet sich in einem oberirdischen Bereich des hybriden Turmbauwerks 1, und zwar oberhalb der Geländeoberkante GOK. Besonders vorteilhaft kann hierdurch die Höhe der Betonturmsäule 3 erhöht und zusätzlich die Fundamenttiefe erheblich reduziert werden, wodurch ein Zeit- und Kostenvorteil insbesondere im Hinblick auf die eingesparten Beton- und Betonstahlmengen entsteht. Die verbleibenden oberen freien Enden 5" der Spannglieder 5 sind in unterschiedlichen Betonturmwandabschnitten 31 bis 3n der Betonturmsäule 3 fixiert, wodurch eine im Hinblick auf die Momentverteilung des hybriden Turmbauwerks 1 optimierte Einleitung der Vorspannungskraft möglich ist, und zwar beispielsweise gestaffelt über mehrere, ausgewählte Betonturmwandabschnitte 31 bis 3n der Betonturmsäule 3.

Die Erfindung wurde voranstehend an einem Ausführungsbeispiel beschrieben. Es versteht sich, dass innerhalb des Schutzbereichs der Ansprüche zahlreiche Änderungen sowie Abwandlungen möglich sind.

### Bezugszeichenliste

- 1: hybrides Turmbauwerk
- 1': Turmkrone
- 2: Fundament
- 21: kombinierte Pfahl-Platten-Gründung
- 211: Fundamentplatte
- 212: Pfähle
- 22: Pfahl-Gründung
- 221: Ringfundament
- 222, 222': Pfähle
- 3: Betonturmsäule
- 3': Hohlraum
- 31 bis 3n: erste bis n-te Betonturmabschnitte
- 311 bis 3nn: erste bis n-te Flanschabschnitte
- 4: Stahlturmelement
- 5: Spannglieder
- 5': oberes freies Ende
- 5": unteres freies Ende
- 6: Festanker
- 7: Längsbohrungen
- 8: Arbeitsplattform

- LA: Turmlängsachse
- H: Höhe Betonturmabschnitt
- D: Durchmesser Betonturmabschnitt
- GOK: Geländeoberkante

## Patentansprüche

1. Hybrides Turmbauwerk, insbesondere für Windenergieanlagen, mit einem Fundament (2), mit zumindest einer auf dem Fundament (2) errichteten Betonturmsäule (3) und mit zumindest einem sich daran anschließenden Stahlturmelement (4), bei dem die Betonturmsäule (3) durch erste bis n-te entlang der Turmlängsachse (LA) aneinander anschließende Betonturmwandabschnitte (31 bis 3n) gebildet ist, wobei die Betonturmwandabschnitte (31 bis 3n) einen ringförmigen Querschnitt aufweisen und zur Beaufschlagung der Betonturmsäule (3) mit einer Vorspannung mehrere innerhalb des von der Betonturmsäule (3) eingeschlossenen Hohlraumes (3') verlaufende, externe Spannglieder (5) vorgesehen sind, die zur gestaffelten Beaufschlagung der Betonturmsäule (3) mit der Vorspannung ausgebildet sind, wobei die Vorspannung über die einzelnen Betonturmwandabschnitte (31 bis 3n) verteilt ist und die Einleitung der Vorspannung zumindest in den an das Fundament (2) anschließenden ersten Betonturmabschnitt (31) erfolgt, wobei das Fundament (2) durch eine kombinierte Pfahl-Platten-Gründung (21) oder eine Pfahl-Gründung (22) bestehend aus zumindest einem Fundamentgrundkörper (211, 221) und mehreren mit diesem verbundenen Pfählen (212, 222) gebildet ist, wobei die Spannglieder (5) mit ihrem unteren freien Ende (5") mit dem ersten, an das Fundament (2) anschließenden Betonturmwandabschnitt (31) verbunden sind, wobei zumindest ein Teil der Spannglieder (5) mit ihren oberen freien Enden (5') mit dem n-ten, dem Stahlturmelement (4) benachbarten Betonturmwandabschnitt (3n) verbunden sind und wobei zumindest ein weiterer Teil der Spannglieder (5) mit zumindest einem zwischen dem ersten und n-ten Betonturmwandabschnitt (31, 3n) angeordneten Betonturmwandabschnitt verbunden sind.

2. Hybrides Turmbauwerk nach Anspruch 1, **dadurch gekennzeichnet, dass** der Fundamentgrundkörper der kombinierten Pfahl-Platten-Gründung (21) durch eine Fundamentplatte (211) gebildet ist.

3. Hybrides Turmbauwerk nach Anspruch 1, **dadurch gekennzeichnet, dass** der Fundamentgrundkörper der Pfahl-Gründung (22) durch ein Ringfundament (222) gebildet ist.

4. Hybrides Turmbauwerk nach einem der Ansprüche 1 bis 3, **dadurch gekennzeichnet, dass** die Fundamentplatte (211) bzw. das Ringfundament (222) einen runden, ovalen, rechteckigen, quadratischen oder polygonartigen Außenquerschnitt aufweisen.

5. Hybrides Turmbauwerk nach einem der vorhergehenden Ansprüche, **dadurch gekennzeichnet, dass** der Außendurchmesser der Fundamentgrundkörper (211, 221) größer als der Außendurchmesser (D) des ersten, an den Fundamentgrundkörper (211, 221) anschließenden Betonturmwandabschnittes (31) ist.

6. Hybrides Turmbauwerk nach einem der Ansprüche 2 bis 5, **dadurch gekennzeichnet, dass** die Pfähle (212) der kombinierten Pfahl-Platten-Gründung (21) näherungsweise parallel zur Turmlängsachse (LA) bzw. näherungsweise senkrecht zur Fundamentplatte (211) angeordnet sind.

7. Hybrides Turmbauwerk nach einem der Ansprüche 3 bis 5, **dadurch gekennzeichnet, dass** jeweils zwei Pfähle (222) der Pfahl-Gründung (22) einen spitzen Winkel einschließen.

8. Hybrides Turmbauwerk nach einem der Ansprüche 1 bis 7, **dadurch gekennzeichnet, dass** die Pfähle (212, 222, 222') in zumindest einer Reihe angeordnet sind.

9. Hybrides Turmbauwerk nach einem der Ansprüche 1 bis 8, **dadurch gekennzeichnet, dass** die Pfähle (212, 222, 222') nahezu gleichmäßig verteilt entlang des Umfangbereiches des Fundamentgrundkörpers (211, 221) angeordnet sind.

10. Hybrides Turmbauwerk nach einem der Ansprüche 1 bis 9, **dadurch gekennzeichnet, dass** die Pfähle (212, 222, 222') konzentrisch zur Turmlängsachse (LA) angeordnet sind.

11. Hybrides Turmbauwerk nach einem der Ansprüche 1 bis 10, **dadurch gekennzeichnet, dass** die Pfähle (212) der kombinierten Pfahl-Platten-Gründung (21) zur Abtragung von 10% bis 90% der Last ausgebildet sind.

12. Hybrides Turmbauwerk nach einem der Ansprüche 1 bis 10, **dadurch gekennzeichnet, dass** die Pfähle (222) der Pfahl-Gründung (22) zur Abtragung von bis zu 99% der Last ausgebildet sind.

13. Hybrides Turmbauwerk nach einem der Ansprüche 1 bis 9, **dadurch gekennzeichnet, dass** die Pfähle (212, 222, 222') durch Fertigteilpfähle oder Ortbetonpfähle gebildet sind.

14. Hybrides Turmbauwerk nach einem der Ansprüche 1 bis 13, **dadurch gekennzeichnet, dass** zur verteilten bzw. gestaffelten Beaufschlagung der Betonturmsäule (3) mit einer Vorspannung die Spannglieder (5) unterschiedliche Längen aufweisen, wobei sich einzelne Spannglieder (5) vom ersten Betonturmwandabschnitt (31) über die ½ bis zu ¾ der gesamten Höhe der Betonturmsäule (3) erstrecken.

15. Hybrides Turmbauwerk nach einem der Ansprüche 1 bis 14, **dadurch gekennzeichnet, dass** die Betonturmwandabschnitte (31 bis 3n) zumindest teilweise einen in den Hohlraum (3') der Betonturmsäule (3) hineinragenden Flanschabschnitt (311 bis 3nn) aufweisen, der in Draufsicht ebenfalls eine ringartige Struktur ausbildet und einstückig mit dem jeweiligen Betonturmwandabschnitt (31 bis 3n) ausgebildet ist.

16. Hybrides Turmbauwerk nach Anspruch 15, **dadurch gekennzeichnet, dass** der jeweilige Flanschabschnitt (311 bis 3nn) an der oberen Stirnseite eines Betonturmwandabschnittes (31 bis 3n) vorgesehen ist und eine umlaufende Konsole ausbildet.

17. Hybrides Turmbauwerk nach Anspruch 16, **dadurch gekennzeichnet, dass** in den Flanschabschnitten (311 bis 3nn) der Betonturmwandabschnitte (31 bis 3n) die Spannglieder (5) geführt sind.

## Claims

1. A hybrid tower structure, particularly for wind energy plants, with a foundation (2), with at least one concrete tower column (3) erected on the foundation (2), and with at least one steel tower element (4) adjoining the concrete tower column, wherein the concrete tower column (3) is formed by first to n-th concrete tower wall sections (31 to 3n) adjoining one another along the longitudinal tower axis (LA), wherein the concrete tower wall sections (31 to 3n) have an annular cross section and wherein several external tensioning elements (5) extending within the hollow space (3') enclosed by the concrete tower column (3) are provided for acting upon the concrete tower column (3) with a prestress, which tensioning elements (5) are designed for acting upon the concrete tower column (3) with the prestress in a staggered fashion, wherein the prestress is distributed over the individual concrete tower wall sections (31 to 3n) and the prestress is introduced at least to the first concrete tower section (31) adjoining the foundation (2), wherein the foundation (2) is formed by a combined pile-slab foundation (21) or a pile foundation (22) consisting of at least one foundation base body (211, 221) and several piles (212, 222) connected thereto, wherein the tensioning elements (5) are connected to the first concrete tower wall section (31) adjoining the foundation (2) with their lower free end (5"), wherein at least a portion of the tensioning elements (5) are connected to the n-th concrete tower wall section (3n) adjoining the steel tower element (4) with their upper free ends (5'), and wherein at least another portion of the tensioning elements (5) are connected to at least one concrete tower wall section arranged between the first and the n-th concrete tower wall section (31, 3n).

2. The hybrid tower structure according to claim 1, **characterized in that** the foundation base body of the combined pile-slab foundation (21) is formed by a foundation slab (211).

3. The hybrid tower structure according to claim 1, **characterized in that** the foundation base body of the pile foundation (22) is formed by a ring foundation (222).

4. The hybrid tower structure according to one of claims 1 to 3, **characterized in that** the foundation slab (211) or the ring foundation (222) respectively has a round, oval, rectangular, square or polygonal outer cross section.

5. The hybrid tower structure according to one of the preceding claims, **characterized in that** the outside diameter of the foundation base body (211, 221) is greater than the outside diameter (D) of the first concrete tower wall section (31) adjoining the foundation base body (211, 221).

6. The hybrid tower structure according to one of claims 2 to 5, **characterized in that** the piles (212) of the combined pile-slab foundation (21) are respectively arranged approximately parallel to the longitudinal tower axis (LA) or approximately perpendicular to the foundation slab (211).

7. The hybrid tower structure according to one of claims 3 to 5, **characterized in that** two piles (222) of the pile foundation (22) respectively include an acute angle.

8. The hybrid tower structure according to one of claims 1 to 7, **characterized in that** the piles (212, 222, 222') are arranged in at least one row.

9. The hybrid tower structure according to one of claims 1 to 8, **characterized in that** the piles (212, 222, 222') are arranged along the peripheral region of the foundation base body (211, 221) in virtually uniform distribution.

10. The hybrid tower structure according to one of claims 1 to 9, **characterized in that** the piles (212, 222, 222') are arranged concentric to the longitudinal tower axis (LA).

11. The hybrid tower structure according to one of claims 1 to 10, **characterized in that** the piles (212) of the combined pile-slab foundation (21) are designed for transferring between 10 % and 90 % of the load.

12. The hybrid tower structure according to one of claims 1 to 10, **characterized in that** the piles (222) of the pile foundation (22) are designed for transferring up to 99 % of the load.

13. The hybrid tower structure according to one of claims 1 to 9, **characterized in that** the piles (212, 222, 222') are formed by prefabricated piles or cast-in-place concrete piles.

14. The hybrid tower structure according to one of claims 1 to 13, **characterized in that** the tensioning elements (5) have different lengths in order to act upon the concrete tower column (3) with a prestress in a distributed or staggered fashion, wherein individual tensioning elements (5) extend from the first concrete tower wall section (31) over ½ to ¾ of the total height of the concrete tower column (3).

15. The hybrid tower structure according to one of claims 1 to 14, **characterized in that** at least some of the concrete tower wall sections (31 to 3n) comprise a flange section (311 to 3nn) that protrudes into the hollow space (3') of the concrete tower column (3), wherein said flange section also forms an annular structure in a top view and is realized integrally with the respective concrete tower wall section (31 to 3n).

16. The hybrid tower structure according to claim 15, **characterized in that** the respective flange section (311 to 3nn) is provided on the upper end face of a concrete tower wall section (31 to 3n) and forms a peripheral console.

17. The hybrid tower structure according to claim 16, **characterized in that** the tensioning elements (5) are guided in the flange sections (311 to 3nn) of the concrete tower wall sections (31 to 3n).

## Revendications

1. Ouvrage de tour hybride, en particulier pour des installations d'énergie éolienne, comprenant une fondation (2) avec au moins une colonne de tour en béton (3) érigée sur la fondation (2) et comprenant au moins un élément de tour en acier (4) se raccordant dessus, dans lequel la colonne de tour en béton (3) est formée par des premiers à n^{ièmes} tronçons de paroi de tour en béton (31 à 3n) se raccordant l'un à l'autre le long de l'axe longitudinal de la tour (LA), dans lequel les tronçons de paroi de tour en béton (31 à 3n) présentent une section transversale annulaire et pour fournir à la colonne de tour en béton (3) une pré-contrainte, plusieurs éléments de serrage (5) externes passant à l'intérieur de l'espace creux (3') inclus par la colonne de tour en béton (3) sont prévus, qui sont conçus pour fournir la pré-contrainte progressivement à la colonne de tour en béton (3), dans lequel la pré-contrainte est repartie sur les différents tronçons de paroi de tour en béton (31 à 3n) et l'introduction de la pré-contrainte a lieu au moins dans le premier tronçon de tour en béton (31) se raccordant sur la fondation (2), sachant que la fondation (2) est formée par une base piliers-plaques combinée (21) ou une base de piliers (22) se composant d'au moins un corps de base de fondation (211, 221) et de plusieurs piliers (212, 222) raccordés à celui-ci, dans lequel les éléments de serrage (5) sont reliés par leur extrémités libres inférieures (5") au premier tronçon de paroi de tour en béton (31) se raccordant sur la fondation (2), dans lequel au moins une partie des éléments de serrage (5) est reliée par leurs extrémités libres supérieures (5') au n^{ième} tronçon de paroi de tour en béton (3n) voisin de l'élément de tour en acier (4) et dans lequel au moins une autre partie des éléments de serrage (5) est reliée à au moins un tronçon de paroi de tour en béton disposé entre le premier et le n^{ième} tronçon de paroi de tour en béton (31, 3n).

2. Ouvrage de tour hybride selon la revendication 1, **caractérisé en ce que** le corps de base de fondation de la base piliers-plaques combinée (21) est formé par une plaque de fondation (211).

3. Ouvrage de tour hybride selon la revendication 1, **caractérisé en ce que** le corps de base de fondation de la base de piliers (22) est formé par une fondation circulaire (222).

4. Ouvrage de tour hybride selon l'une des revendications 1 à 3, **caractérisé en ce que** la plaque de fondation (211), respectivement la fondation circulaire (222) présente une section transversale extérieure ronde, ovale, rectangulaire, carrée ou polygonale.

5. Ouvrage de tour hybride selon l'une des revendications précédentes, **caractérisé en ce que** le diamètre extérieur du corps de base de la fondation (211, 221) est supérieur au diamètre extérieur (D) du premier tronçon de paroi de tour en béton (31) se raccordant sur le corps de base de fondation (211, 221)

6. Ouvrage de tour hybride selon l'une des revendications 2 à 5, **caractérisé en ce que** les piliers (212) de la base piliers-plaques combinée (21) sont disposés presque parallèles à l'axe longitudinal de la tour (LA), respectivement presque verticalement à la plaque de fondation (211).

7. Ouvrage de tour hybride selon l'une des revendications 3 à 5, **caractérisé en ce que** respectivement deux piliers (222) de la base de piliers (22) incluent un angle aigu.

8. Ouvrage de tour hybride selon l'une des revendications 1 à 7, **caractérisé en ce que** les piliers (212, 222, 222') sont disposés en au moins une rangée.

9. Ouvrage de tour hybride selon l'une des revendications 1 à 8, **caractérisé en ce que** les piliers (212, 222, 222') sont répartis presque uniformément le long du pourtour du corps de base de fondation (211, 221).

10. Ouvrage de tour hybride selon l'une des revendications 1 à 9, **caractérisé en ce que** les piliers (212, 222, 222') sont disposés de façon concentrique à l'axe longitudinal de la tour (LA).

11. Ouvrage de tour hybride selon l'une des revendications 1 à 10, **caractérisé en ce que** les piliers (212) de la base piliers-plaques combinée (21) sont conçus pour enlever 10 % à 90 % de la charge.

12. Ouvrage de tour hybride selon l'une des revendications 1 à 10, **caractérisé en ce que** les piliers (222) de la base de piliers (22) sont conçus pour enlever jusqu'à 99 % de la charge.

13. Ouvrage de tour hybride selon l'une des revendications 1 à 9, **caractérisé en ce que** les piliers (212, 222, 222') sont formés par des piliers préfabriqués ou des piliers de béton coulé sur place.

14. Ouvrage de tour hybride selon l'une des revendications 1 à 13, **caractérisé en ce que** pour une pré-contrainte fournie répartie, respectivement progressivement à la colonne de tour en béton (3), les éléments de serrage (5) présentent différentes longueurs, sachant que les différents éléments de serrage (5) s'étendent à partir du premier tronçon de tour en béton (31) sur 1/2 à 3/4 de la hauteur totale de la colonne de tour en béton (3).

15. Ouvrage de tour hybride selon l'une des revendications 1 à 14, **caractérisé en ce que** les tronçons de paroi de tour en béton (31 à 3n) présentent au moins partiellement un tronçon de flanc (311 à 3nn) pénétrant dans l'espace creux (3') de la colonne de tour en béton (3), qui forme également une structure circulaire en vue aérienne et est conçu d'une seule pièce avec le tronçon de paroi de tour en béton (31 à 3n) respectif.

16. Ouvrage de tour hybride selon la revendication 15, **caractérisé en ce que** le tronçon de flanc (311 à 3nn) respectif est prévu sur la face avant supérieure d'un tronçon de paroi de tour en béton (31 à 3n) et forme une console périphérique.

17. Ouvrage de tour hybride selon la revendication 16, **caractérisé en ce que** les éléments de serrage (5) sont guidés dans les tronçons de flanc (311 à 3nn) des tronçons de paroi de tour en béton (31 à 3n).
